# FASCICULE DE BREVET EUROPEEN

(11) **EP 2 311 056 B1**
(45) Date de publication et mention de la délivrance du brevet: **31.07.2013**
(21) Numéro de dépôt: 09784206.6
(22) Date de dépôt: 15.06.2009
(51) Int. Cl.: H01H 23/16, H02K 7/18, G08C 19/38, H02K 7/06

(54) **DISPOSITIF DE TELECOMMANDE POUR INTERRUPTEUR EQUIPE D'UN MECANISME AMPLIFICATEUR ET D'UN GENERATEUR ROTATIF, ET INTERRUPTEUR DOTE D'UN TEL DISPOSITIF**
FERNSTEUERUNGSVORRICHTUNG FÜR EINEN SCHALTER MIT EINEM VERSTÄRKUNGSMECHANISMUS UND EINEM DREHGENERATOR UND MIT EINER DERARTIGEN VORRICHTUNG AUSGESTATTETER SCHALTER
REMOTE CONTROL DEVICE FOR A SWITCH COMPRISING AN AMPLIFYING MECHANISM AND A ROTARY GENERATOR, AND SWITCH COMPRISING SUCH A DEVICE

(30) Priorité: 04.08.2008 FR 0804432
(43) Date de publication de la demande: 20.04.2011
(73) Titulaire: Schneider Electric Industries SAS, 92500 Rueil-Malmaison (FR)
(72) Inventeur: CARTIER MILLON, Christophe, F-38400 Saint Martin D'here (FR); VIGOUROUX, Didier, F-38190 Brignoud (FR); CLAVEL, Reymond, CH-1377 Oulens (CH)
(74) Mandataire: Picard, Laurent
(86) Numéro de dépôt international: PCT/FR2009/000709
(87) Numéro de publication internationale: WO 2010/015730

(56) Documents cités:
- EP-A- 1 324 468
- WO-A-01/67580
- DE-A1- 10 112 072
- JP-A- 2005 209 129

## Description

### DOMAINE TECHNIQUE DE L'INVENTION

L'invention relève du domaine des dispositifs de télécommande pour interrupteur comportant un générateur rotatif couplé à un organe de commande par l'intermédiaire d'un mécanisme de couplage permettant d'amplifier l'énergie mécanique générée lors de l'actionnement de l'organe de commande.

Plus précisément, l'invention concerne un dispositif de télécommande pour interrupteur comprenant :
- un organe de commande mobile,
- un générateur d'électricité équipé d'un stator et d'un rotor montés de façon coaxiale autour d'un axe du générateur,
- un circuit électrique couplé au générateur pour produire un signal électrique de télécommande, et
- un mécanisme de couplage entre l'organe de commande et le rotor pour transformer le mouvement de l'organe de commande en rotation du rotor,

### ÉTAT DE LA TECHNIQUE

L'utilisation de générateurs d'électricité dans les dispositifs de télécommande pour interrupteur permet de disposer d'une énergie électrique lors de l'actionnement de l'organe de commande. Cette énergie peut être utilisée pour la transmission télécommandée d'un ordre de télécommande pour actionner un interrupteur et/ou pour transmettre une information, par exemple sur l'état dudit interrupteur. Par exemple, les générateurs peuvent être utilisés dans des interrupteurs mobiles afin de commander à distance des moyens de commutation déportés.

Il est connu d'utiliser des générateurs de type rotatif dans les dispositifs de télécommande pour interrupteur afin de convertir l'énergie mécanique induite par l'actionnement de l'organe de commande en énergie électrique. Cette conversion est généralement réalisée par l'entremise d'un mécanisme de couplage permettant de transformer le mouvement de l'organe de commande en rotation d'un rotor du générateur.

Un tel dispositif de télécommande pour interrupteur comportant un générateur rotatif est connu de la demande internationale WO 01/67580. L'interrupteur électrique décrit dans cette demande comporte un organe de commande mobile, un générateur rotatif, un circuit électrique couplé au générateur pour produire un signal électrique de télécommande, et un mécanisme de transmission utilisant l'énergie dérivée du mouvement de l'organe de commande pour actionner un rotor dudit générateur rotatif afin de produire de l'électricité. Le mécanisme de transmission de l'interrupteur électrique décrit dans cette demande comporte des engrenages complexes. Il en résulte que la vitesse du rotor dépend directement de la vitesse d'actionnement de l'organe de commande, ce qui peut entrainer des variations quant à la quantité d'énergie générée lors de chaque actionnement de l'interrupteur.

### EXPOSÉ DE L'INVENTION

L'invention vise à remédier aux problèmes techniques des dispositifs de télécommande de l'art antérieur en proposant un dispositif de télécommande pour interrupteur comprenant :
- un organe de commande mobile,
- un générateur d'électricité équipé d'un stator et d'un rotor montés de façon coaxiale autour d'un axe du générateur,
- un circuit électrique couplé au générateur pour produire un signal électrique de télécommande, et
- un mécanisme de couplage entre l'organe de commande et le rotor pour transformer le mouvement de l'organe de commande en rotation du rotor,

Le dispositif de télécommande selon l'invention est caractérisé en ce que le mécanisme de couplage comprend au moins un élément d'ancrage escamotable couplé au rotor et au moins un mécanisme amplificateur du mouvement de l'organe de commande couplé au dit organe de commande, ledit mécanisme amplificateur étant équipé d'un élément d'accrochage destiné à coopérer avec l'élément d'ancrage pour entrainer ledit rotor lorsque l'organe de commande est actionné.

Selon l'invention, l'élément d'accrochage est déplaçable dans un mouvement essentiellement de translation selon un axe de transmission perpendiculaire à l'axe du générateur.

Selon l'invention, le mécanisme amplificateur comprend un premier bras monté pivotant sur un bâti dudit dispositif à l'aide d'un premier pivot, un second bras monté pivotant sur le premier bras par l'entremise d'un second pivot, une extrémité libre du second bras étant montée coulissante sur une glissière solidaire du bâti s'étendant sensiblement parallèlement à l'axe de transmission, l'élément d'accrochage étant monté sur ledit second bras.

Selon un mode de réalisation, l'élément d'accrochage est monté fixement sur le second bras. Alternativement, l'élément d'accrochage est monté pivotant sur le second bras. Dans ce dernier cas, l'élément d'accrochage est de préférence monté pivotant sur le second pivot du second bras.

De préférence, le mécanisme de couplage comprend un disque d'entrainement rotatif comprenant une première face couplée au rotor et une seconde face sur laquelle débouche l'élément d'ancrage. Avantageusement, le mécanisme de couplage comprend des moyens de rappel permettant de rappeler ledit disque d'entrainement dans une position initiale.

Selon un mode de réalisation, la première face du disque d'entrainement est couplée au rotor par l'entremise d'un disque de liaison monté solidairement sur ledit rotor et comprenant des entailles réparties régulièrement autour d'une circonférence dudit disque de liaison, la première face du disque d'entrainement comportant une patte d'entrainement équipée d'une extrémité libre pour coopérer avec l'une des entailles et entrainer le rotor en rotation. De préférence, la patte d'entrainement est disposée sur la première face du disque d'entrainement de sorte que, lorsque le disque d'entrainement tourne de la position initiale vers une position déployée, l'extrémité libre de la patte d'entrainement glisse sur le disque de liaison, et lorsque le disque d'entrainement tourne de la position déployée vers la position initiale, ladite extrémité s'accroche à une entaille en entrainant le rotor en rotation.

De préférence, l'élément d'ancrage est escamotable lorsque le disque d'entrainement est dans une position déployée. Avantageusement, le disque d'entrainement comprend au moins une ouverture permettant de loger et d'escamoter l'élément d'ancrage. L'élément d'ancrage est, de préférence, une patte montée pivotante sur les bords de l'ouverture par l'entremise d'un troisième pivot. L'élément d'ancrage comprend, de préférence, un coude faisant sailli sur la première face du disque d'entrainement et coopérant avec une surface de came pour faire pivoter l'élément d'ancrage entre une position d'ancrage et la position escamotée lors de la rotation du disque d'entrainement entre la position initiale et la position déployée. La surface de came est, de préférence, formée sur une partie du bâti, ladite surface de came comprenant un creux pour faire pivoter l'élément d'ancrage dans la position escamotée.

L'invention concerne également un interrupteur comportant au moins un contact mobile et un dispositif de télécommande pour actionner ledit interrupteur, caractérisé en ce que le dispositif de télécommande est tel que décrit précédemment, ledit contact mobile étant actionné à distance par ledit dispositif de télécommande.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
La figure 1 est une vue éclatée d'un mode de réalisation du dispositif de télécommande.
La figure 2 est une vue du dispositif de télécommande de la figure 1 dans son boitier.
La figure 3 est une vue du dispositif de télécommande de la figure 1 en dehors du boitier.
Les figures 4 et 5 sont des vues du mécanisme amplificateur selon des angles différents.
La figure 6 est une vue schématique illustrant le fonctionnement du mécanisme amplificateur.
La figure 7 est une vue de la partie supérieure du bâti et des glissières du mécanisme amplificateur ménagées dans cette partie supérieure.
La figure 8 représente la seconde face du disque d'entrainement.
La figure 9 est une vue de profil du disque d'entrainement.
La figure 10 représente l'élément d'ancrage.
La figure 11 est une vue de la première face du disque d'entrainement.
La figure 12 représente essentiellement le générateur du dispositif de télécommande.
La figure 13 représente le disque de liaison solidaire du rotor.
La figure 14 est une vue du dispositif de télécommande partiellement assemblé permettant de visualiser le bâti.
La figure 15 correspond à la figure 14 dans laquelle le bâti n'a pas été représenté.
La figure 16 est une vue de la partie inférieure du bâti destinée à loger le générateur rotatif. La figure 17 est une vue de la partie principale du bâti dans laquelle sont formées les surfaces de came.
Les figures 18 et 19 sont des vues représentant partiellement le dispositif de télécommande avec le mécanisme amplificateur et le disque d'entrainement respectivement dans une position initiale et dans une position déployée.
La figure 20 représente de façon schématique les principaux éléments d'un interrupteur comportant un dispositif de télécommande et un dispositif de commutation déporté.

### DESCRIPTION DETAILLEE D'UN MODE DE RÉALISATION

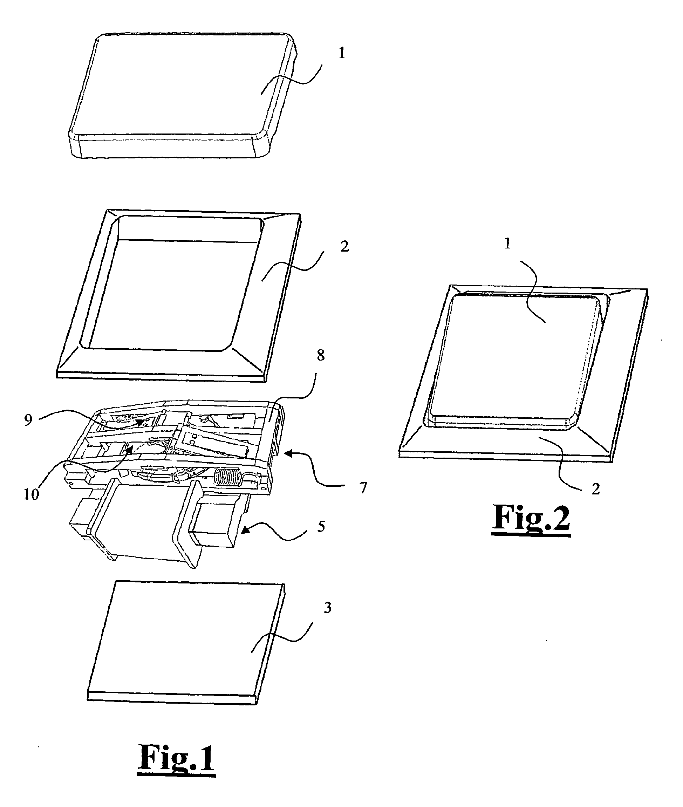

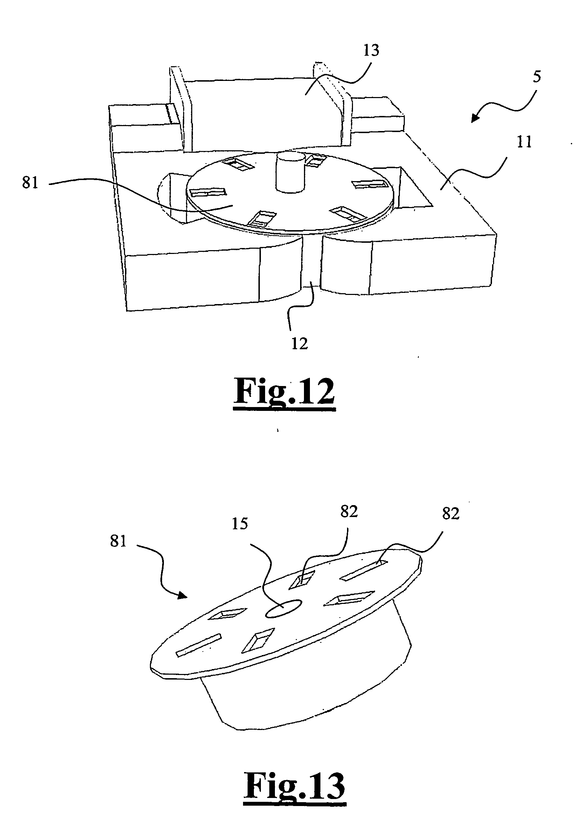

En référence aux figures 1 et 2, le dispositif de télécommande comporte un boitier sur lequel est monté à basculement un organe de commande 1. Le boitier comporte un cadre 2 entourant l'organe de commande et un support 3 par lequel le dispositif peut être fixé par exemple sur un mur. Dans le boitier, le dispositif de télécommande comporte un générateur d'électricité 5. Comme cela est représenté sur la figure 12, le générateur d'électricité 5 est équipé d'un stator ferromagnétique 11, d'un rotor 12 composé d'aimants destinés à créer des variations de flux magnétique, et d'une bobine de cuivre 13 enroulée autour du stator, dans laquelle est généré un courant électrique. Le rotor est monté rotatif autour d'un axe de guidage 15 du générateur. Plus précisément, un trou axial non représenté situé au centre du rotor permet la mise en place de l'axe 15, ce qui permet d'assurer un bon comportement dynamique. Notons que le générateur peut être n'importe quel générateur de type rotatif. Avantageusement, il peut s'agir d'une machine à flux transverse telle que celle décrite dans la demande de brevet français 08/02379.

Le dispositif de télécommande comporte également un circuit électrique formé sur une face du support 3. Ce circuit électrique est couplé au générateur 5, ou plus exactement au stator 11 dudit générateur, et permet de produire un signal électrique de télécommande. Ce circuit peut également comporter des composants électroniques pour produire le signal de commande et des moyens de transmission radio pour le transmettre vers les moyens récepteurs d'un appareil électrique télécommandé par le dispositif de télécommande.

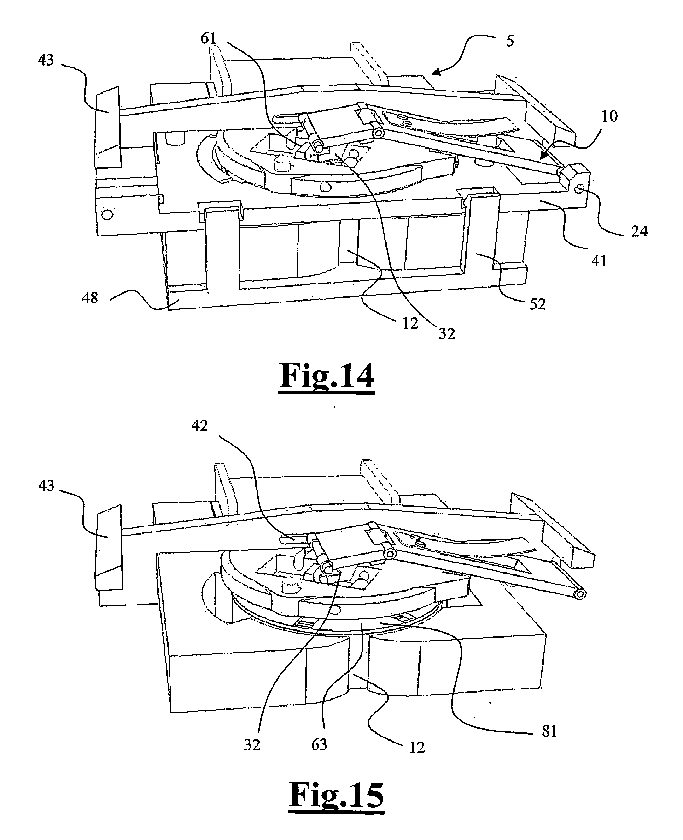

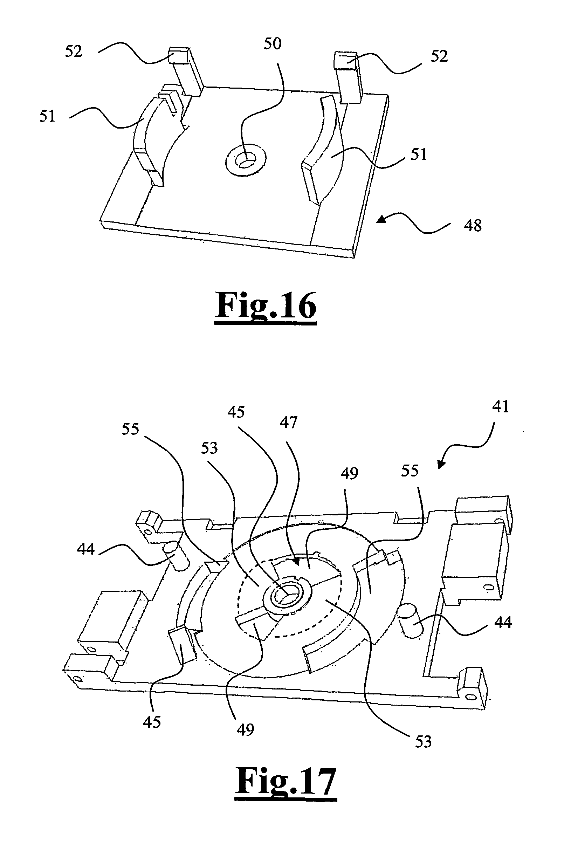

Le dispositif de télécommande comporte en outre, dans son boitier, un mécanisme de couplage 7 entre l'organe de commande 1 et le rotor 12 dont une fonction principale est de transformer le mouvement de basculement de l'organe de commande 1 en rotation du rotor 12. Le mécanisme de couplage est disposé sur un bâti 8 comprenant une partie principale 41 représentée à la figure 17, une partie supérieure 43 représentée à la figue 7 et une partie inférieure 48 représentée à la figure 16. La partie inférieure 48 du bâti 8 permet de loger le générateur et comprend un axe de centrage 50 du rotor et des parois latérales 51 pour maintenir ledit rotor. Comme cela est également visible sur la figure 14, la partie inférieure 48 du bâti est fixée sur la partie principale 41 à l'aide de patte de fixation 52.

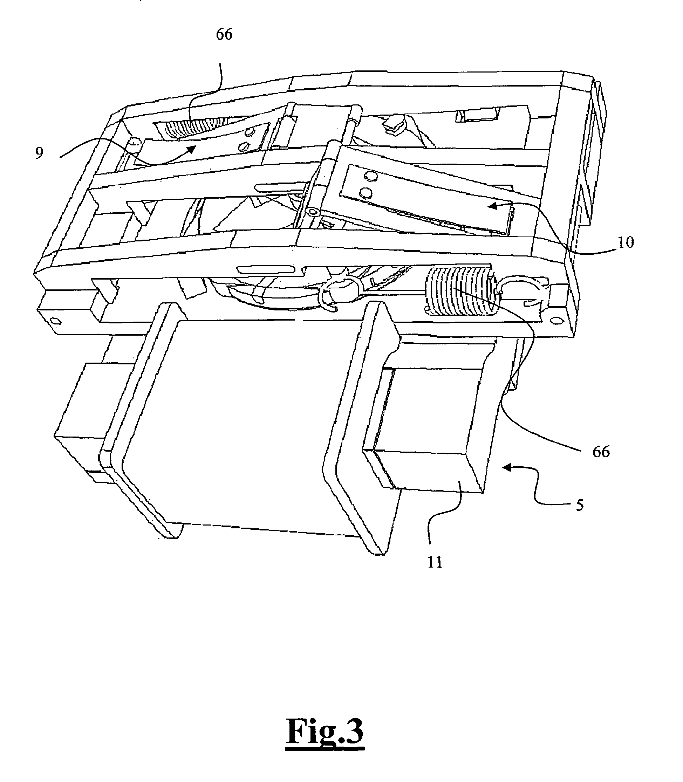

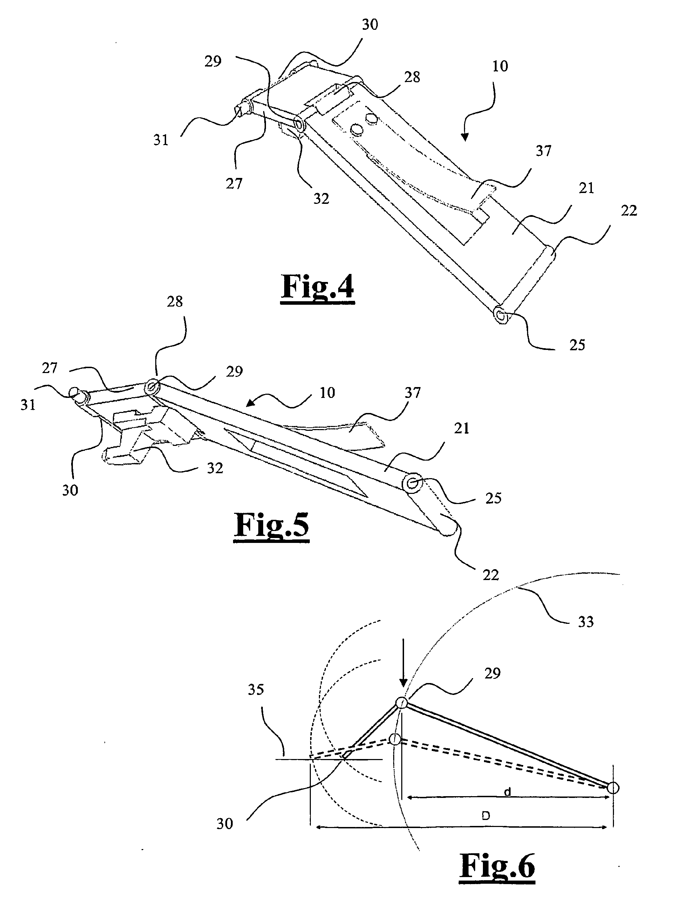

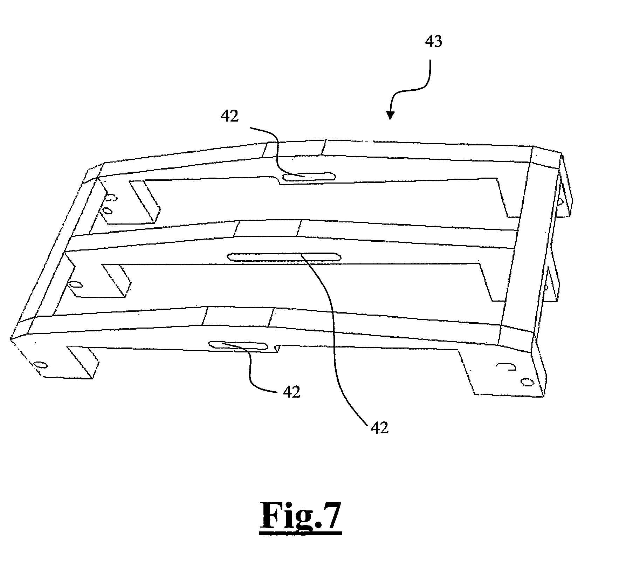

Le mécanisme de couplage comporte deux mécanismes amplificateurs 9, 10 du mouvement de l'organe de commande couplés au dit organe de commande. Un mécanisme amplificateur est représenté de manière plus détaillée sur les figures 4 et 5. En référence à ces figures, le mécanisme amplificateur comprend un premier bras 21 dont une extrémité 22 est montée pivotante sur le bâti 8 par l'entremise d'un premier pivot 25. Comme cela est visible sur la figure 14, ce premier pivot est engagé dans les orifices 24 de la partie principale 41 du bâti 8. Le mécanisme amplificateur comprend également un second bras 27 dont une extrémité 28 est montée pivotante par rapport au premier bras par l'entremise d'un second pivot 29. Comme cela est visible sur les figures 3 et 7, l'autre extrémité libre 30 du second bras 27 est montée coulissante dans une glissière 42 solidaire de la partie supérieure 43 du bâti 8, par l'entremise d'un ergot 31. Le mécanisme amplificateur comprend, en outre, un élément d'accrochage 32 monté sur le second bras 27.

Comme cela est illustré sur la figure 6, lorsqu'une pression est exercée verticalement sur le second pivot 29, par l'intermédiaire de l'organe de commande, ledit second pivot se déplace selon un arc de cercle 33 centré sur le premier pivot 25. L'extrémité 30 du second bras se déplace quant à elle en translation selon un axe référencé 35 de la glissière 42. L'élément d'accrochage 32 qui est monté sur le second bras se déplace sensiblement de la même façon que l'extrémité 30 du second bras dans un mouvement essentiellement de translation selon un axe de transmission parallèle à l'axe 35 de la glissière 42. Entre la position initiale du mécanisme amplificateur représentée en traits pleins et sa position déployée représentée en pointillés, le déplacement vertical du second pivot est relativement important par rapport à son déplacement horizontal. L'extrémité 30 du second bras 27, ainsi que l'élément d'accrochage 32, se déplacent quant à eux horizontalement le long de l'axe de transmission sur une distance plus importante que le déplacement horizontal du second pivot. Grâce à ce mécanisme, le déplacement vertical du point de l'organe de commande s'appuyant sur le second pivot génère ainsi un déplacement horizontal de l'extrémité 30 du second bras et de l'élément d'accrochage le long de l'axe de transmission. Par rapport à un système classique à un seul bras de levier, ce mécanisme permet en outre, avec un encombrement réduit, d'amplifier le mouvement de l'organe de commande. Ce mécanisme amplificateur peut donc être adapté dans un boitier de télécommande de faible épaisseur.

Dans le mode de réalisation représenté sur les figures 4, 5, 14 et 15, l'élément d'accrochage 32 est monté pivotant sur le second bras, ou en particulier pivotant sur le second pivot du second bras. Ceci permet à l'élément d'accrochage 32 de ne pas gêner le mouvement de retour du disque d'entraînement 62 décrit plus loin.

Le mécanisme amplificateur est généralement équipé de moyens de rappel permettant de rappeler ledit mécanisme amplificateur, ainsi que l'organe de commande auquel il est couplé, dans sa position initiale. Comme cela est visible sur les figures 4 et 5, les moyens de rappel du mécanisme amplificateur comportent une lame ressort 37 dont une extrémité est montée fixement sur le premier bras 21. L'extrémité libre de la lame ressort 37 coopère avec un support de lame 44 de la partie principale 41 du bâti 8 représenté sur la figure 17. De cette façon, lorsque l'organe de commande est relâché, le premier bras 21 retourne dans sa position d'origine en entrainant l'organe de commande. Dans le mode de réalisation représenté, le dispositif de télécommande comporte deux mécanismes amplificateurs 9 et 10, pouvant être actionnés par l'entremise de l'organe de commande par pression sur les seconds pivots 29. Lorsque le dispositif de télécommande est intégré dans un interrupteur commandant des moyens lumineux, l'utilisation conjointe de deux mécanismes amplificateurs peut permettre d'associer à une fonction de type bouton poussoir une fonction de variateur de lumière. Dans d'autres modes de réalisation non représentés, l'utilisation d'un seul mécanisme amplificateur peut être suffisante.

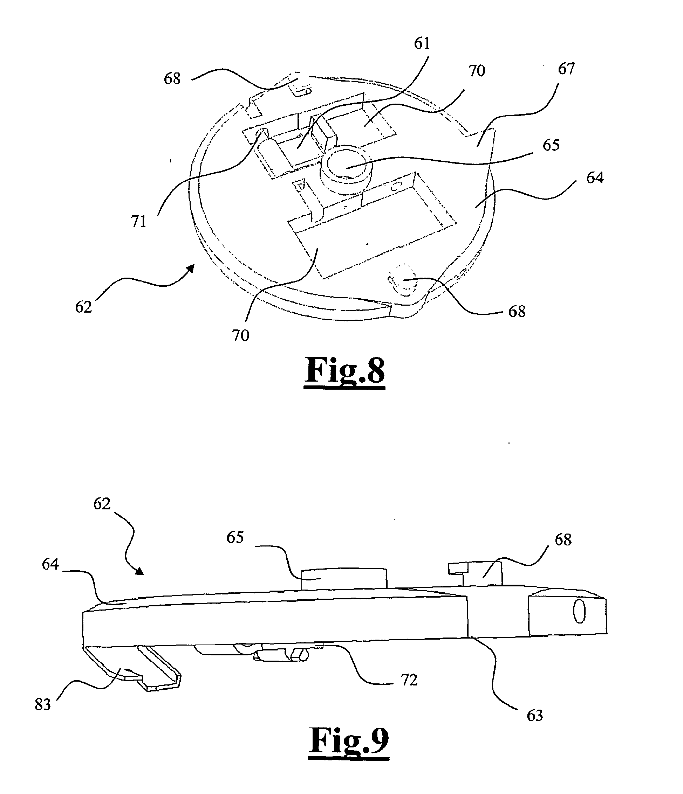

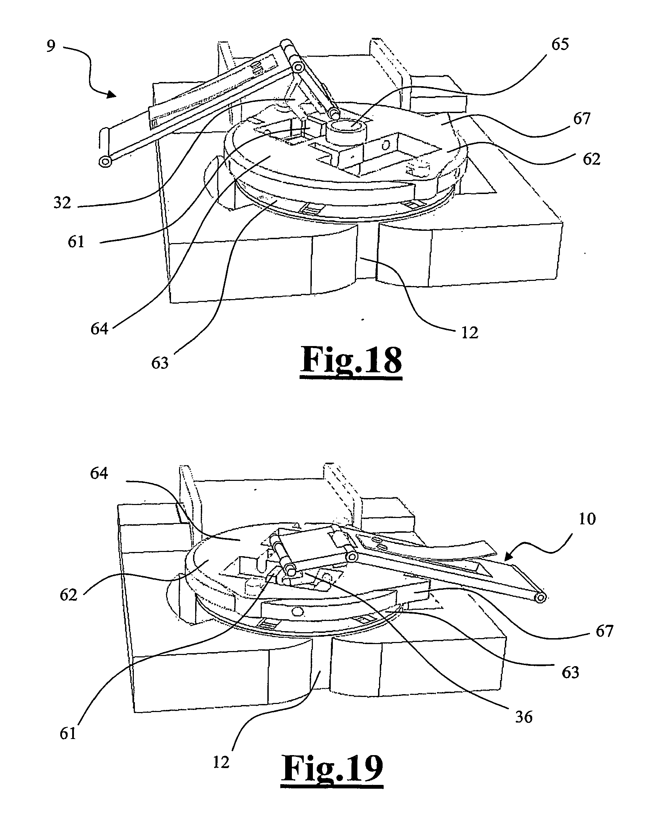

Comme cela est visible sur les figures 18 et 19, le mécanisme de couplage comprend deux éléments d'ancrage 61 couplés au rotor 12 et destinés à coopérer avec les éléments d'accrochage 32 pour entrainer ledit rotor lorsque l'organe de commande est actionné. Les éléments d'ancrage 61 sont disposés sur un disque d'entrainement 62 rotatif du mécanisme de couplage en vis-à-vis avec l'axe de transmission le long duquel se déplace l'élément d'accrochage. Ce disque d'entrainement 62 également représenté sur les figures 8, 9 et 11, comprend une première face 63 couplée au rotor 12 et une seconde face 64 sur laquelle débouchent les éléments d'ancrage 61. Le disque d'entrainement est monté rotatif autour d'un axe 65 sensiblement confondu avec l'axe 15 du générateur. Plus exactement, l'axe de guidage 15 du rotor est inséré dans un trou axial du disque d'entrainement. La rotation du disque d'entrainement 62 est limitée par des butées 45 solidaires de la partie principale 41 du bâti 8 et coopérant avec des appuis 67 dudit disque d'entrainement. Des moyens de rappel agissant sur la rotation du disque d'entrainement comportent des ressorts 66 visibles sur la figure 3, chaque ressort étant disposé entre un ergot non représenté de la partie principale 41 du bâti 8 et une accroche 68 sur la seconde face du disque d'entrainement.

Dans le mode de réalisation représenté, les éléments d'ancrage 61 sont escamotables lorsque le disque d'entrainement est dans une position déployée. Cette position déployée du disque d'entrainement 62 est obtenue au bout de la course d'entrainement par l'élément d'accrochage. Dans le mode de réalisation représenté, cette course correspond à une rotation du disque d'entrainement de 60 degrés. Lorsque le disque d'entrainement atteint cette position déployée, les éléments d'ancrages passent d'une position d'ancrage à une position escamotée, et l'élément d'accrochage ne peut plus réaliser sa fonction d'accrochage. Dès que la position déployée du disque d'entrainement 62 est atteinte, les moyens de rappel rappellent ledit disque d'entrainement dans sa position initiale. Ainsi, après avoir atteint la position déployée, le disque d'entrainement 62 est découplé par rapport aux mécanismes amplificateurs 9, 10 et est entrainé dans sa position initiale en entrainant le rotor. Cette rotation du disque d'entrainement et du rotor, est effectuée à une vitesse dépendante de la force de rappel des moyens de rappel et indépendante de la vitesse de l'organe de commande.

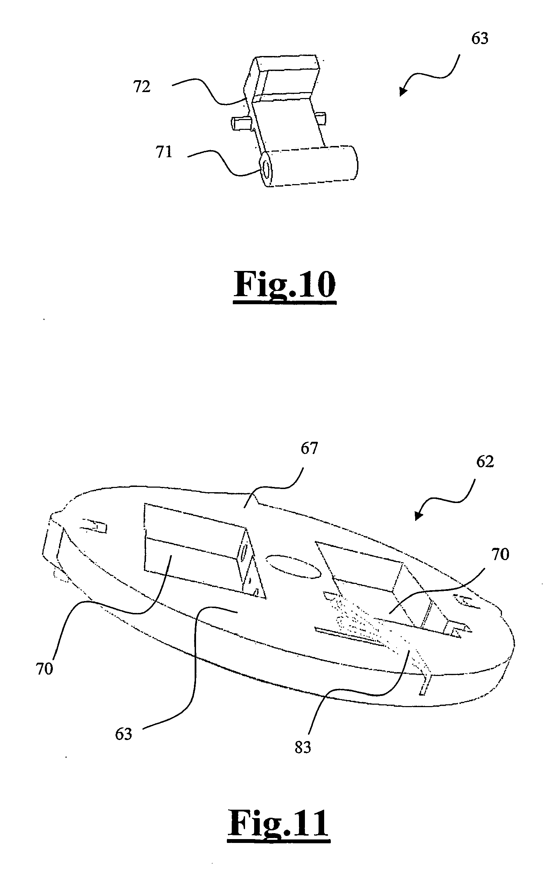

En référence aux figures 8 et 10, les moyens d'escamotage de l'élément d'ancrage comprennent deux ouvertures 70 dans lesquelles les éléments d'ancrage 61 sont disposés. Plus précisément, ces ouvertures 70 permettent de loger les éléments d'ancrage et de les escamoter dans l'épaisseur du disque d'entrainement lorsque le disque d'entrainement est dans sa position déployée. Chaque élément d'ancrage se présente sous la forme d'une patte montée pivotante sur les bords de l'ouverture 70 par l'entremise d'un troisième pivot 71. Chaque élément d'ancrage comprend un coude 72 faisant sailli sur la première face 63 du disque d'entrainement 62. Le coude 72 de l'élément d'ancrage est disposé de manière à glisser sur une surface de came 47 solidaire de la partie principale 41 du bâti 8 et visible sur la figure 17. Ainsi, lors de la rotation du disque d'entrainement 62, les coudes 72 des éléments d'ancrage 61 en contact avec la surface de came décrivent un arc de cercle sur ladite surface came. Les surfaces de came 47 présentent des profils conformés pour faire pivoter l'élément d'ancrage 61 entre la position d'ancrage et la position escamotée lors de la rotation du disque d'entrainement 62 entre la position initiale et la position déployée. Comme cela est représenté sur la figure 17, les surfaces de came 47 sont conformées dans un secteur circulaire de la partie principale 41 du bâti 8 centré sur un axe 45 confondu avec l'axe du générateur 15. Les surfaces de came 47 comprennent des creux 49 pour faire pivoter l'élément d'ancrage dans la position escamotée et des pentes 53 pour les faire pivoter en position d'ancrage. Les surface de came 47, l'élément d'accrochage et/ou l'élément d'ancrage sont généralement conçus pour obtenir un pivotement brusque de l'élément d'ancrage de la position d'ancrage à la position escamotée. En effet, cette rupture mécanique brutale engendre, par rotation des aimants du rotor, une variation rapide du flux magnétique dans le système et une génération d'énergie accrue indépendamment de la vitesse d'actionnement de l'organe de commande..

Comme cela est visible sur la figure 15, la première face 63 du disque d'entrainement 62 est couplée au rotor 12 par l'entremise d'un disque de liaison 81 solidaire dudit rotor. Le disque de liaison 81 est un disque cranté comportant, sur une face en vis-à-vis avec la première face du disque d'entrainement, des crans ou des entailles 82 réparties autour d'une circonférence dudit disque de liaison (figure 13). Comme cela est visible sur les figures 9 et 11, la première face 63 du disque d'entrainement 62 comporte une patte d'entrainement 83 flexible équipée d'une extrémité libre destiné à accrocher l'une des entailles 82 et à entrainer en rotation le rotor 12 solidaire dudit disque de liaison 81. Ceci est rendu possible grâce aux ouvertures 55 de la partie principale 41 du bâti, à travers lesquelles la patte d'entrainement peut effectivement coopérer avec le disque de liaison pour accrocher l'une de ses entailles.

Comme cela est visible sur la figure 11, la patte d'entrainement 83 est montée sur la première face 63 du disque d'entrainement de manière inclinée afin de glisser sur le disque de liaison lorsque le disque d'entrainement tourne dans un sens, et d'accrocher une entaille du disque de liaison lorsque ledit disque d'entrainement tourne dans l'autre sens. La patte d'entrainement 83 est généralement réalisée dans un matériau flexible. La patte d'entrainement 83 est assemblée de façon à être contrainte sur la surface du disque de liaison, lorsqu'elle occupe une position entre deux entailles. Lorsque la patte d'entrainement est en vis-à-vis avec une entaille, elle se déploie pour se loger à l'intérieure de l'entaille. Plus précisément, la patte d'entrainement 83 est disposée sur la première face 63 du disque d'entrainement 62, de sorte que, lorsque le disque d'entrainement tourne entre sa position initiale et sa position déployée, l'extrémité libre de la patte d'entrainement glisse sur le disque de liaison, et lorsque le disque d'entrainement tourne entre sa position déployée et sa position initiale, ladite extrémité s'accroche à une entaille en entrainant le rotor en rotation. De cette façon, le rotor est uniquement entrainé lors de la rotation du disque d'entrainement entre sa position déployée et sa position initiale. Cette rotation étant réalisée sous l'impulsion des moyens de rappel 66, la vitesse d'entrainement du disque de liaison et du rotor est indépendante de la pression exercée sur l'organe de commande. Par conséquent, la quantité d'énergie électrique produite par le générateur à chaque actionnement de l'organe de commande est donc sensiblement constante et prévisible. En d'autres termes, le rotor est découplé par rapport à l'organe de commande.

Dans le mode de réalisation représenté, l'angle de rotation du disque d'entrainement entre sa position initiale et sa position déployée est de 60 degrés. Afin de maximiser la quantité d'énergie électrique produite par le générateur, les entailles 82 du disque de liaison 81 sont disposées de sorte que, lorsque le disque d'entrainement atteint sa position déployée, la patte d'entrainement 83 est en vis-à-vis ou en phase avec l'une de ces entailles 82. Ainsi, entre la position initiale à zéro degré et la position déployée à 60 degrés du disque d'entrainement, la patte d'entrainement du rotor sort de l'une des entailles et parcours la surface du disque de liaison 81 pour aller se placer en face de la prochaine entaille. Ceci permet d'entrainer le disque de liaison, et donc le rotor, sur l'ensemble de la course du disque d'entrainement entre sa position déployée et sa position initiale. Afin d'assurer une bonne synchronisation entre le disque d'entrainement 62 et le disque de liaison 81, le disque de liaison comporte six entailles séparées par des secteurs de 60 degrés. Ainsi, à la fin de la rotation du disque d'entrainement 62 entre la position déployée et la position initiale, le disque de liaison est positionné pour que l'entaille suivante positionnée correctement. C'est-à-dire, lors du prochain actionnement de l'organe de commande, l'entaille suivante sera en vis-à-vis avec la patte d'entrainement 83 lorsque le disque d'entrainement atteindra sa position déployée. De manière générale, l'angle de rotation entre la position initiale et la position déployée du disque d'entrainement est choisi de sorte que 360 soit un multiple entier de la valeur en degrés cette angle, telle que par exemple, 120, 60, 30 degrés. En d'autres termes, le rapport entre 360 et la valeur en degré de l'angle de rotation entre la position initiale et la position déployée du disque d'entrainement est généralement égal à un nombre entier. De ce fait, le disque de liaison 81 peut également être qualifié de disque de synchronisation.

Lors d'une action manuelle sur l'organe de commande 1, le second pivot 29 d'un des mécanismes amplificateur 9, 10 est actionné pour entrainer l'élément d'accrochage 32 dans un déplacement en translation selon l'axe de transmission dudit élément d'accrochage. L'élément d'accrochage vient en prise avec l'élément d'ancrage 61 du disque d'entrainement auquel il est associé. A cet instant, les deux éléments d'ancrage sont dans leurs positions d'ancrage par opposition à leurs positions escamotées. En effet, à cet instant, le disque d'entrainement 62 est maintenu dans sa position initiale grâce aux ressorts 66, et dans cette position initiale, le coude 72 des éléments d'ancrage 61 coopèrent avec des parties planes des surfaces de came 47 pour maintenir ces éléments d'ancrage dans leur position d'ancrage. Juste avant d'atteindre la position déployée du disque d'entrainement, le coude 72 des éléments d'ancrage coopère avec des pentes 53 des surfaces de came 47 pour faire pivoter les éléments d'ancrage dans leur position escamotée. Le déplacement en translation de l'élément d'accrochage 32 entraine donc le disque d'entrainement 62 en rotation de sa position initiale vers sa position déployée en lui appliquant une force s'opposant à la force de rappel exercée par les ressorts 66. Pendant cette rotation, l'extrémité libre de la patte d'entrainement 83 du disque d'entrainement 62 glisse sur le disque de liaison 81 à travers une ouverture 55 de la partie principale 41 du bâti 8. Ainsi, pendant la rotation du disque d'entrainement entre sa position initiale et sa position déployée, le rotor solidaire du disque de liaison n'est pas entrainé en rotation et aucune énergie électrique n'est encore fournie par le générateur 5.

Après une rotation de 60 degrés, le disque d'entrainement 62 atteint sa position déployée, dans laquelle le coude 72 des éléments d'ancrage 61 coopère avec les creux 49 des surfaces de came 47 qui ont permis d'obtenir le pivotement complet des éléments d'ancrage dans leur position escamotée. A ce moment, l'élément d'accrochage n'est donc plus en prise avec l'élément d'ancrage, et les ressorts 66 sont suffisamment étirés pour pouvoir entrainer le disque dans le sens contraire, de sa position déployée vers sa position initiale. Dans cette position déployée, la patte d'entrainement 83 du disque d'entrainement 62 est en vis-à-vis avec une entaille 82 du disque de liaison 81. Lorsque le disque d'entrainement entame sa rotation de sa position déployée vers sa position initiale, la patte d'entrainement 83 va donc s'accrocher à l'entaille du disque de liaison en vis-à-vis pour entrainer le rotor sur toute sa course de retour vers la position initiale. De cette façon une énergie électrique indépendante de la pression appliquée sur l'organe de commande va être générée. En même temps, le mécanisme amplificateur et l'organe de commande sont rappelés dans leurs positions initiales grâce à la lame ressort 37 coopérant avec le support de lame 44.

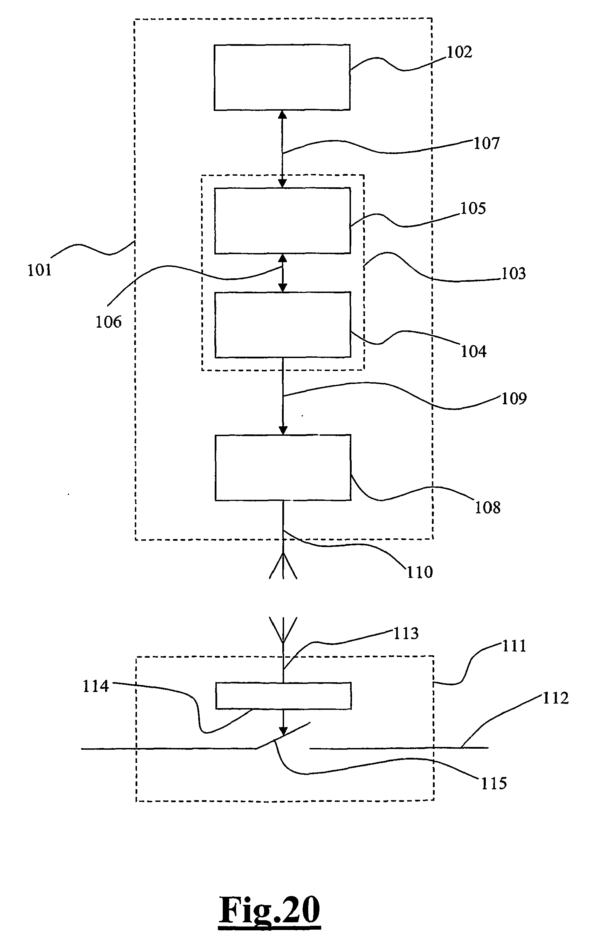

Le dispositif de télécommande décrit ci-dessus peut être intégré dans n'importe quel dispositif interrupteur, tel que celui représenté schématiquement à la figure 20. Cet interrupteur comporte un dispositif de télécommande 101 et un dispositif de commutation 111 actionné par l'entremise dudit dispositif de télécommande. Le dispositif de télécommande 101 comporte un organe de commande mobile 102 et un générateur d'électricité 103 équipé d'un stator 104 et d'un rotor 105 montés de façon coaxiale et couplés par un entrefer 106. Le dispositif de télécommande comporte, en outre, un mécanisme de couplage 107 entre l'organe de commande et le rotor. Ce mécanisme de couplage permet de transformer le mouvement de l'organe de commande 102 en rotation du rotor 105. L'énergie électrique fournie par le générateur 103 est envoyée dans des moyens de traitement d'un circuit électrique 108 par une ligne 109. Cette énergie permet de générer un signal de commande qui est envoyé au dispositif de commutation 111 à l'aide d'une antenne 110. De cette façon, la transmission du signal de commande de l'interrupteur est réalisée à l'aide d'une énergie électrique obtenue par transformation de l'énergie mécanique générée par l'actionnement de l'organe de commande. Ainsi, l'utilisation du dispositif de télécommande ne nécessite aucune source d'énergie externe et aucune batterie. Le dispositif de commutation 111 associé au dispositif de télécommande 101 est, quant à lui, monté sur une ligne électrique 112. Le dispositif de commutation comporte des moyens de réception 113, en l'occurrence une antenne, permettant de recevoir le signal de commande issu du dispositif de télécommande 101. Les moyens de réception sont connectés à des moyens d'actionnement 114 couplés au contact mobile 115. Les moyens d'actionnement, tels que représentés à la figure 1, permettent ainsi de traiter le signal de commande pour actionner l'ouverture ou la fermeture du contact mobile 115.

## Revendications

1. Dispositif de télécommande pour interrupteur comprenant :
- un organe de commande (1) mobile,
- un générateur d'électricité (5) équipé d'un stator (11) et d'un rotor (12) montés de façon coaxiale autour d'un axe (15) du générateur,
- un circuit électrique (3) couplé au générateur pour produire un signal électrique de télécommande, et
- un mécanisme de couplage entre l'organe de commande et le rotor pour transformer le mouvement de l'organe de commande en rotation du rotor, ledit mécanisme de couplage comprenant au moins un élément d'ancrage (61) escamotable couplé au rotor et au moins un mécanisme amplificateur (9, 10) du mouvement de l'organe de commande couplé au dit organe de commande, ledit mécanisme amplificateur étant équipé d'un élément d'accrochage (32) destiné à coopérer avec l'élément d'ancrage (61) pour entrainer ledit rotor (12) lorsque l'organe de commande est actionné, dispositif **caractérisé en ce que** l'élément d'accrochage (32) est déplaçable dans un mouvement essentiellement de translation selon un axe de transmission perpendiculaire à l'axe du générateur,
et **en ce que** le mécanisme amplificateur (9, 10) comprend un premier bras (21) monté pivotant sur un bâti (8) dudit dispositif à l'aide d'un premier pivot (25), un second bras (27) monté pivotant sur le premier bras par l'entremise d'un second pivot (29), une extrémité libre (30) du second bras étant montée coulissante sur une glissière (42) solidaire du bâti (8) s'étendant sensiblement parallèlement à l'axe de transmission, l'élément d'accrochage (32) étant monté sur ledit second bras (27).

2. Dispositif selon la revendication 1, **caractérisé en ce que** l'élément d'accrochage (32) est monté fixement sur le second bras (27).

3. Dispositif selon la revendication 1, **caractérisé en ce que** l'élément d'accrochage (32) est monté pivotant sur le second bras (27).

4. Dispositif selon la revendication 3, **caractérisé en ce que** l'élément d'accrochage (32) est monté pivotant sur le second pivot (29) du second bras (27).

5. Dispositif selon l'une des revendications 1 à 4, **caractérisé en ce que** le mécanisme de couplage comprend un disque d'entrainement (62) rotatif comprenant une première face (63) couplée au rotor et une seconde face (64) sur laquelle débouche l'élément d'ancrage (61).

6. Dispositif selon la revendication 5, **caractérisé en ce que** le mécanisme de couplage comprend des moyens de rappel (66) permettant de rappeler ledit disque d'entrainement (62) dans une position initiale.

7. Dispositif selon l'une des revendication 5 ou 6, **caractérisé en ce que** la première face (63) du disque d'entrainement (62) est couplée au rotor (12) par l'entremise d'un disque de liaison (81) monté solidairement sur ledit rotor et comprenant des entailles (82) réparties régulièrement autour d'une circonférence dudit disque de liaison, la première face (63) du disque d'entrainement (62) comportant une patte d'entrainement (83) équipée d'une extrémité libre pour coopérer avec l'une des entailles (82) et entrainer le rotor (12) en rotation.

8. Dispositif selon la revendication 7, **caractérisé en ce que** la patte d'entrainement (83) est disposée sur la première face (63) du disque d'entrainement de sorte que, lorsque le disque d'entrainement (62) tourne de la position initiale vers une position déployée, l'extrémité libre de la patte d'entrainement (83) glisse sur le disque de liaison, et lorsque le disque d'entrainement (62) tourne de la position déployée vers la position initiale, ladite extrémité s'accroche à une entaille (82) en entrainant le rotor (12) en rotation.

9. Dispositif selon l'une des revendications 5 à 8, **caractérisé en ce que** l'élément d'ancrage (61) est escamotable lorsque le disque d'entrainement (62) est dans une position déployée.

10. Dispositif selon la revendication 9, **caractérisé en ce que** le disque d'entrainement comprend au moins une ouverture (70) permettant de loger et d'escamoter l'élément d'ancrage (61).

11. Dispositif selon la revendication 10, **caractérisé en ce que** l'élément d'ancrage (61) est une patte montée pivotante sur les bords de l'ouverture (70) par l'entremise d'un troisième pivot (71).

12. Dispositif selon la revendication 11, **caractérisé en ce que** l'élément d'ancrage (61) comprend un coude (72) faisant sailli sur la première face (63) du disque d'entrainement (62) et coopérant avec une surface de came (47) pour faire pivoter l'élément d'ancrage (61) entre une position d'ancrage et la position escamotée lors de la rotation du disque d'entrainement (62) entre la position initiale et la position déployée.

13. Dispositif selon la revendication 12, **caractérisé en ce que** la surface de came (47) est formée sur une partie (41) du bâti (8), ladite surface de came comprenant un creux (49) pour faire pivoter l'élément d'ancrage dans la position escamotée.

14. Interrupteur comportant au moins un contact mobile (115) et un dispositif de télécommande (101) pour actionner ledit interrupteur, **caractérisé en ce que** le dispositif de télécommande (101) est selon l'une des revendications précédentes, ledit contact mobile (115) étant actionné à distance par ledit dispositif de télécommande.

## Patentansprüche

1. Fernbetätigungseinrichtung für einen Schalter, umfassend:
- ein bewegbares Betätigungsglied (1),
- einen Stromerzeuger (5) mit einem Stator (11) und einen Rotor (12), welche koaxial um eine Achse (15) des Stromerzeugers montiert sind,
- ein mit dem Stromerzeuger gekoppelter elektrischer Stromkreis (3) zur Erzeugung eines elektrischen Fernbetätigungssignals sowie
- eine zwischen dem Betätigungsorgan und dem Rotor angeordnete Kupplungsvorrichtung zur Umwandlung der Bewegung des Betätigungsglieds in eine Drehung des Rotors, welche Kupplungsvorrichtung mindestens ein mit dem Rotor gekoppeltes, versenkbares Halteelement (61) und mindestens einen mit dem genannten Betätigungsglied gekoppelten Verstärkungsmechanismus (9, 10) zur Verstärkung der Bewegung des Betätigungslieds umfasst, wobei der genannte Verstärkungsmechanismus ein Mitnehmerelement (32) umfasst, das dazu dient, mit dem Halteelement (61) zusammenzuwirken, um den genannten Rotor (12) bei Betätigung des Betätigungsglieds mitzuführen, welche Einrichtung **dadurch gekennzeichnet ist, dass** das Mitnehmerelement (32) in einer annähernd geradlinigen Bewegung längs einer, senkrecht zur Generatorachse angeordneten Übertragungsachse verschoben werden kann, und dass der Verstärkungsmechanismus (9, 10) einen mithilfe eines ersten Drehzapfens (25) schwenkbar auf einem Grundrahmen (8) der genannten Einrichtung gelagerten ersten Arm (21) sowie einen mithilfe eines zweiten Drehzapfens (29) schwenkbar mit dem ersten Arm verbundenen zweiten Arm (27) umfasst, wobei ein freies Ende (30) des zweiten Arms in einer am Grundrahmen (8) ausgebildeten, annähernd parallel zur Übertragungsachse angeordneten Führungsbahn (42) gleitend verschoben werden kann und das Mitnehmerelement (32) am genannten zweiten Arm (27) befestigt ist.

2. Einrichtung nach Anspruch 1, **dadurch gekennzeichnet, dass** das Mitnehmerelement (32) fest am zweiten Arm (27) befestigt ist.

3. Einrichtung nach Anspruch 1 , **dadurch gekennzeichnet, dass** das Mitnehmerelement (32) schwenkbar am zweiten Arm (27) befestigt ist.

4. Einrichtung nach Anspruch 3, **dadurch gekennzeichnet, dass** das Mitnehmerelement (32) schwenkbar am zweiten Drehzapfen (29) des zweiten Arms (27) befestigt ist.

5. Einrichtung nach irgendeinem der Ansprüche 1 bis 4, **dadurch gekennzeichnet, dass** die Kupplungsvorrichtung eine drehbare Mitnehmerscheibe (62) mit einer, mit dem Rotor gekoppelten ersten Seite (63) sowie einer zweiten Seite (64) umfasst, aus der das Halteelement (61) hervorsteht.

6. Einrichtung nach Anspruch 5, **dadurch gekennzeichnet, dass** die Kupplungsvorrichtung Rückstellmittel (66) umfasst, die eine Rückstellung der genannten Mitnehmerscheibe (62) in eine Anfangsstellung erlauben.

7. Einrichtung nach einem der Ansprüche 5 oder 6, **dadurch gekennzeichnet, dass** die erste Seite (63) der Mitnehmerscheibe (62) über eine Verbindungsscheibe (81) mit dem Rotor (12) gekoppelt ist, welche Verbindungsscheibe fest mit dem genannten Rotor verbunden ist und gleichmäßig auf einer Kreislinie verteilte Aussparungen (82) umfasst, wobei an der ersten Seite (63) der Mitnehmerscheibe (62) eine Mitnehmernase (83) mit einem freien Ende ausgebildet ist, die dazu dient, mit einer der Aussparungen (82) zusammenzuwirken und den Rotor (12) drehwirksam mitzuführen.

8. Einrichtung nach Anspruch 7, **dadurch gekennzeichnet, dass** die Mitnehmernase (83) auf der ersten Seite (63) der Mitnehmerscheibe angeordnet ist, derart dass beim Verdrehen der Mitnehmerscheibe (62) von der Anfangsstellung in eine Wirkstellung das freie Ende der Mitnehmernase (83) auf der Mitnehmerscheibe entlanggleitet und beim Verdrehen der Mitnehmerscheibe (62) von der Wirkstellung in die Anfangsstellung (62) das genannte Ende in eine der Aussparungen (82) eingreift und den Rotor (12) drehwirksam mitführt.

9. Einrichtung nach einem der Ansprüche 5 bis 8, **dadurch gekennzeichnet, dass** das Halteelement (61) versenkt werden kann, wenn sich die Mitnehmerscheibe (62) in einer Wirkstellung befindet.

10. Einrichtung nach Anspruch 9, **dadurch gekennzeichnet, dass** die Mitnehmerscheibe mindestens eine Öffnung (70) umfasst, in die das Halteelement (61) eingeführt und versenkt werden kann.

11. Einrichtung nach Anspruch 10, **dadurch gekennzeichnet, dass** das Halteelement (61) als Klappe ausgebildet ist, die mithilfe eines dritten Drehzapfens (71) schwenkbar in den Rändern der Öffnung (70) gelagert ist.

12. Einrichtung nach Anspruch 11, **dadurch gekennzeichnet, dass** das Halteelement (61) ein Kniestück (72) umfasst, das aus der ersten Seite (63) der Mitnehmerscheibe (62) hervorsteht und mit einer Steuerkurvenfläche (47) zusammenwirkt, um das Halteelement (61) beim Verdrehen der Mitnehmerscheibe (62) zwischen der Anfangsstellung und der Wirkstellung zwischen einer Haltestellung und der versenkten Stellung (62) zu verschwenken.

13. Einrichtung nach Anspruch 12, **dadurch gekennzeichnet, dass** die Steuerkurvenfläche (47) in einem Teilabschnitt (41) des Grundrahmens (8) ausgebildet ist, wobei in der genannten Steuerkurvenfläche eine Ausnehmung (49) ausgebildet ist, um das Halteelement in die versenkte Stellung zu verschwenken.

14. Schalter mit mindestens einem beweglichen Kontakt (115) sowie einer Fernbetätigungseinrichtung (101) zur Betätigung des genannten Schalters, **dadurch gekennzeichnet, dass** die Fernbetätigungseinrichtung (101) nach einem der vorhergehenden Ansprüche ausgebildet ist und die Fernbetätigung des genannten beweglichen Kontakts (115) über die genannte Fernbetätigungseinrichtung erfolgt.

## Claims

1. A remote control device for a switch comprising:
- movable control means (1),
- an electricity generator (5) equipped with a stator (11) and a rotor (12) fitted in coaxial manner around a spindle (15) of the generator,
- an electric circuit (3) connected to the generator to produce an electric remote control signal, and
- a coupling mechanism between the control means and the rotor to transform the movement of the control means into rotation of the rotor, said coupling mechanism comprising at least one retractable anchoring member (61) coupled with the rotor and at least one amplifying mechanism (9, 10) of the movement of the control means coupled to said control means, said amplifying mechanism being equipped with a latching part (32) designed to operate in conjunction with the anchoring member (61) to drive said rotor (12) when the control means are actuated,
a device **characterized in that** the latching part (32) is able to be moved in an essentially translational movement along a transmission axis perpendicular to the axis of the generator,
and **in that** the amplifying mechanism (9, 10) comprises a first arm (21) mounted swivelling on a frame (8) of said device by means of a first pivot-pin (25), a second arm (27) mounted swivelling on the first arm by means of a second pivot-pin (29), a free end (30) of the second arm being mounted sliding on a slide (42) securedly attached to the frame (8) extending in substantially parallel manner to the transmission axis, the latching part (32) being fitted on said second arm (27).

2. The device according to claim 1, **characterized in that** the latching part (32) is securedly fixed on the second arm (27).

3. The device according to claim 1, **characterized in that** the latching part (32) is mounted swivelling on the second arm (27).

4. The device according to claim 3, **characterized in that** the latching part (32) is mounted swivelling on the second pivot-pin (29) of the second arm (27).

5. The device according to one of claims 1 to 4, **characterized in that** the coupling mechanism comprises a rotary drive disk (62) comprising a first surface (63) coupled to the rotor and a second surface (64) onto which the anchoring part (61) opens out.

6. The device according to claim 5, **characterized in that** the coupling mechanism comprises biasing means (66) enabling said drive disk (62) to be biased to an initial position.

7. The device according to one of claims 5 or 6, **characterized in that** the first surface (63) of the drive disk (62) is coupled to the rotor (12) by means of a connecting disk (81) fitted in securedly attached manner to said rotor and comprising notches (82) arranged in regular manner around a circumference of said connecting disk, the first surface (63) of the drive disk (62) comprising a drive lug (83) equipped with a free end to operate in conjunction with one of the notches (82) and to drive the rotor (12) in rotation.

8. The device according to claim 7, **characterized in that** the drive lug (83) is arranged on the first surface (63) of the drive disk in such a way that, when the drive disk (62) rotates from the initial position to a deployed position, the free end of the drive lug (83) slides on the connecting disk, and when the drive disk (62) rotates from the deployed position to the initial position, said end latches into a notch (82) driving the rotor (12) in rotation.

9. The device according to one of claims 5 to 8, **characterized in that** the anchoring member (61) is retractable when the drive disk (62) is in a deployed position.

10. The device according to claim 9, **characterized in that** the drive disk comprises at least one opening (70) enabling the anchoring element (61) to be housed and to be retracted.

11. The device according to claim 10, **characterized in that** the anchoring element (61) is a lug mounted swivelling on the edges of the opening (70) by means of a third pivot-pin (71).

12. The device according to claim 11, **characterized in that** the anchoring element (61) comprises an elbow (72) salient from the first surface (63) of the drive disk (62) and operating in conjunction with a cam surface (47) to make the anchoring member (61) swivel between an anchoring position and the retracted position when rotation of the drive disk (62) takes place between the initial position and the deployed position.

13. The device according to claim 12, **characterized in that** the cam surface (47) is formed on a part (41) of the frame (8), said cam surface comprising a recess (49) to make the anchoring member swivel to the retracted position.

14. A switch comprising at least one movable contact (115) and a remote control device (101) to actuate said switch, **characterized in that** the remote-control device (101) is according to one of the foregoing claims, said movable contact (115) being actuated remotely by said remote control device.
